# EUROPEAN PATENT SPECIFICATION

(11) **EP 0 941 455 B1**
(45) Date of publication and mention of the grant of the patent: **14.08.2002**
(21) Application number: 97951983.2
(22) Date of filing: 26.11.1997
(51) Int. Cl.: G01D 5/347

(54) **OPTICAL RULE FOR LINEAR MEASURES INCORPORATING A GUIDE FOR THE CARRIAGE OF THE OPTICAL READER**
OPTISCHES MESSLINEAL FÜR LINEARMESSUNGEN MIT EINER FÜHRUNG FÜR DEN MESSWAGEN DES OPTISCHEN ABLESEKOPFES
LECTEUR MICROMETRIQUE DE MESURE LINEAIRE INCORPORE DANS UN GUIDE POUR LE CHARIOT DU LECTEUR OPTIQUE

(30) Priority: 28.11.1996 IT MI962486
(43) Date of publication of application: 15.09.1999
(73) Proprietor: Givi Misure S.r.l., 20054 Nova Milanese (IT)
(72) Inventor: BRAMBILLA, Stefano, I-20152 Milano (IT)
(74) Representative: Faggioni, Giovanmaria, Dr.
(86) International application number: EP9706602
(87) International publication number: WO9823924

(56) References cited:
- GB-A- 2 070 253
- US-A- 4 340 814
- US-A- 4 892 416
- PATENT ABSTRACTS OF JAPAN vol. 8, no. 117 (P-277) [1554] , 31 May 1984 & JP 59 023210 A (MASAO OBATA), 6 February 1984,

## Description

The present invention concerns an "optical rule" for measuring linear displacements. Rules of this type comprise - as described for example in EP-B-0.105.119, and EP-B-0.247.353 and GB-A-2 070 253 - a metal strip, carrying a continuous sequence of parallel notches forming a measure grating, and an optical reader movable along said measure grating to read said notches. The measure grating is mounted inside a sheath in the form of an elongated box-like body, wherein, it is kept perfectly aligned and tensioned through means which normally allow to compensate the elongations of the measure grating due to temperature changes.

Optical precision rules of this type are particularly used in the conventional or numerically controlled machine tools, wherein the sheath housing the grating is fixed onto a part of the machine tool, generally the fixed part, while the optical reader is fixed onto the machine tool part which is movable in respect of the fixed part. Thanks to this type of assembly, when the optical reader is moved along the measure grating, it generates electric signals which are interpreted by the control unit of the machine tool as providing information on the position of one part of the machine tool in respect of the other part thereof.

Since the box-like sheath housing the grating is rigidly mounted, parallel to the axis of displacement of the second part of the machine tool in respect of the first part, the optical reader - fixed onto the second part of the machine tool - performs a movement which is perfectly parallel to the measure grating. No problem normally arises as to mounting and guiding of the optical reader in respect of the grating.

As a result of applying numerical control systems to synchronized forming presses, and of using optical rules on such machines, a problem has arisen as regards to guiding of the optical reader. It is known in fact that in such forming presses - due, on one hand, to the structure of the machine and, on the other hand, to the high bending efforts and thus to the stresses involved - at least one of the reciprocally moving parts is subject to notable deflections. Seen that the sheath of the measure grating is fixed on one part, while the optical reader is fixed on the other part, it is evident that such deflections end by preventing the correct working of the optical reader, which gets to interfere with the measure grating whereby, besides supplying wrong measurements, it is no doubt damaged thereby.

To overcome these difficulties, the constructors of forming presses have adopted complicated solutions - thus difficult and expensive to carry out- generally providing for the sheath to be mounted directly on one part of the forming press, for instance the movable part, and for the optical reader to be mounted on the other part, for instance the fixed part, with the interposition of a support which, though being connected with the second fixed part, is apt to follow the deflections of the first movable part. Said support generally consists of a mechanical unit in the form of a frame comprising two columns (or guides), along which slide ball bushings (or carriages) which, reciprocally connected, cause the sliding, free from slacks, of the optical reader along the rule.

The object of the present invention is to propose an optical rule structure which is apt to overcome the above difficulties and which, due to its easy assembly and to its low cost, can be generally applied on any type of machine tool and, in particular, on a forming press. Said object is reached with an optical rule having the characteristics specified in claim 1.

Further characteristics and advantages of the optical rule according to the present invention will anyhow be more evident from the following detailed description of a preferred embodiment thereof, given by way of example and illustrated on the accompanying drawings, in which:
Fig. 1 is a perspective view of an optical rule according to the invention;
Fig. 2 is a cross section view of the same rule; and
Fig. 3 is a section of the rule along the line III-III of fig. 2.

As clearly shown on the drawings, the optical rule according to the invention consists of a sheath 1 produced from a cut down size of metal section, for example an extruded aluminum or aluminum alloy section, split lengthwise into two chambers and, precisely, a chamber 1a to house a measure grating R and a chamber 1b to house a carriage C.

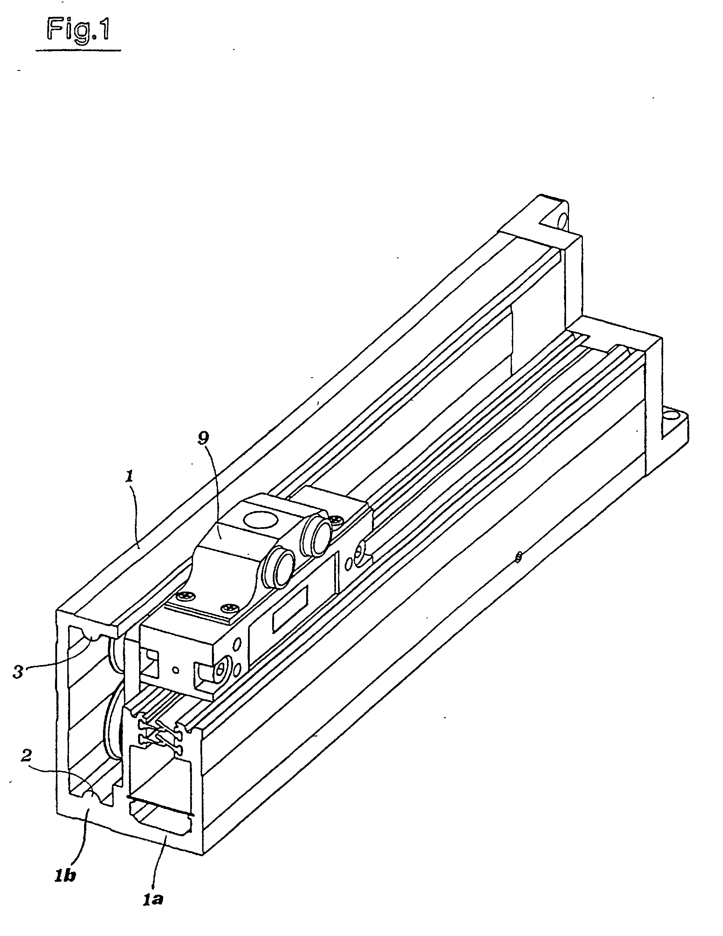

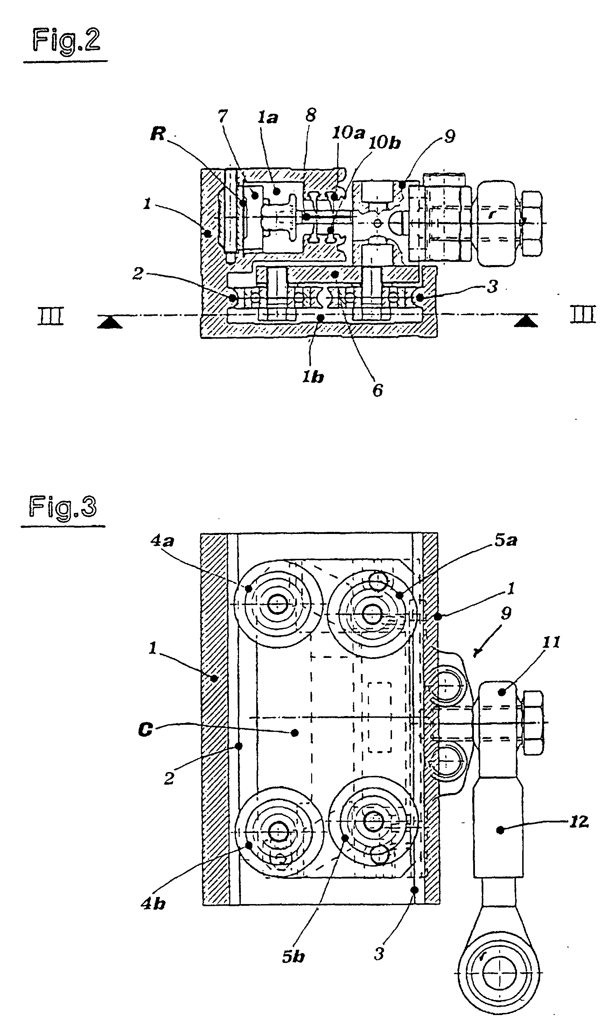

According to a characteristic aspect of the present invention, the second chamber 1b includes a precision guide formed by a pair of rails 2, 3, longitudinally extending along opposite walls of said chamber. More exactly, since the sheath 1 is produced by extrusion, the rails 2, 3 are in the form of ribs obtained in one piece with the walls of the sheath during the extrusion step. In figs. 1 and 2, said ribs have a convex semicircle profile. It is evident, however, that the rails could have any other profile, or even be formed as grooves, instead of ribs.

As shown in fig. 3, on the guide formed by the rails 2, 3, there are slidably mounted two pairs of wheels 4a, 4b and, respectively, 5a, 5b, the axles of which are fixed onto a plate 6 of the carriage C. Said wheels have a bearing profile complementary to that of the rails. Thus, when the rails are in the form of ribs (as shown), said wheels have a bearing surface in the form of a semicircle profiled groove; whereas, when the rails are formed as grooves, said wheels have a bearing profile complementary to that of the grooves.

Preferably, one of the two pairs of wheels - for instance, the pair 4a, 4b - is mounted with the axles fixed onto the plate 6, while the axles of the other pair of wheels 5a, 5b, are mounted, adjustable in position, perpendicularly to the rails 2, 3. This assembly allows to control the slack of the wheels bearing onto the rails 2, 3, so that the carriage C may move along said rails with no slack, but also without any effort.

According to an alternative embodiment (not shown on the drawings), the pair of wheels 5a, 5b, could be replaced by a single wheel mounted in an intermediate position in respect of the wheels 4a and 4b; likewise, and alternatively, the wheels 4a, 4b, could be replaced by a single wheel mounted in an intermediate position in respect of the wheels 5a and 5b.

The first chamber 1a of the sheath 1 is instead meant to house the optical rule, essentially comprising a measure grating R, which - according to known technique, and as described for example in EP-B-0.105.119 and EP-B-0.247.353 - is formed by a continuous sequence of parallel notches, arranged at a very short mutual distance (for example, of the order of microns) on a supporting metal strip, which is mounted perfectly tensioned inside the chamber 1a.

As clearly shown in fig. 2, an optical reader 7 slides - always in known manner - along the measure grating R, in strict proximity thereto. For this purpose, the optical reader 7 is mounted on a thin arm 8, projecting from a sliding head 9 and penetrating into the chamber 1a through a longitudinal opening thereof. Said opening is provided with flexible sealing lips 10a, 10b, through which the thin arm 8 can freely slide with a minimum friction. The sliding head 9 is in turn mounted on the plate 6 of the carriage C and thus moves jointly therewith.

The arrangement is such that the sliding surface of the carriage C along the rails 2, 3, is perfectly parallel to the surface of the measure grating R, so as to ensure a movement of the optical reader 7 which is in turn perfectly parallel to the grating R.

To use the aforedescribed optical rule according to the present invention, one provides:
- on one hand, to fix the sheath 1 on one part of the machine tool, which may be either the fixed structure or the movable unit thereof; in particular, for what concerns the application to a synchronized forming press, the sheath 1 is for example fixed onto the movable part of the machine;
- on the other hand, to simply anchor the sliding head 9, mounted on the carriage C, to the other part of the machine tool, through connection means having two degrees of freedom.

Connection means of this type can consist for example - in a simple embodiment shown in fig. 3 - of a stiff arm 12 connected, through a pivot joint or a ball joint 11 , on one side to the sliding head 9 and on the other side to the other part of the machine tool (not shown). Thanks to said connection means, when one part of the machine tool moves in respect of the other part, the carriage C and the sliding head 9, mutually connected, move parallel to the sheath 1, without said movement being in the least subject to the bending stresses which the two machine parts undergo one in respect of the other.

It is anyhow understood that the invention is not limited to the particular embodiment and variants described heretofore, which merely form a non limiting example of its scope, but that various modifications can be introduced, all within reach of a person skilled in the art, without thereby departing from the protection field of the present invention.

## Claims

1. Optical rule for linear measures, particularly for measuring the displacement of a movable part of a machine tool in respect of a fixed part thereof, of the type comprising a sheath (1) in the form of a box-like body, having means for the stiff anchorage to a first of said parts of the machine tool, into a main chamber (1a) of said box-like body there being housed, on one hand, a measure grating (R) formed by a continuous sequence of parallel notches on a linear strip, said measure grating (R) being fixedly mounted on the box-like body (1), and on the other hand, an optical reader (7) mounted movable in respect of said measure grating (R), guide means being further provided in said main chamber (1a) to guide with precision the movements of the optical reader (7) along the axis of the main chamber (1a),
**characterized in that** it comprises,
- a supplementary guide (2, 3) rigidly associated to the box-like body of the sheath (1) and parallel to said measure grating (R),
- a carriage (C) sliding with no slack along said supplementary guide (2, 3),
- means (8, 9) to mount said optical reader onto said carriage (C), and
- connection means (12, 11) having two degrees of freedom, to connect said carriage (C) to a second of said parts of the machine tool.

2. Optical rule as in claim 1), wherein said sheath (1) consists of a metal section bar (1), and said guide (2, 3) is formed in one piece with said metal section bar (1).

3. Optical rule as in claim 1), wherein said sheath (1) is split lengthwise into two chambers (1a, 1b), each having at least one longitudinal open side, the first chamber (1a) housing the measure grating (R), while the carriage (C) is slidably mounted into the second chamber (1b), said carriage (C) being equipped with an arm (8) to support the optical reader(7).

4. Optical rule as in claim 3) wherein, on said carriage (C) there is mounted a sliding head (9), from which projects said arm (8) supporting the optical reader (7).

5. Optical rule as in claim 4), wherein said arm (8) supporting the optical reader (7) is a thin arm which projects into the first chamber (1a) through at least one pair of longitudinal sealing lips (10a, 10b), fixed in correspondence of the open side of said first chamber (1a)

6. Optical rule as in claim 1), wherein said guide (2, 3) consists of at least two rails (2, 3) in the form of ribs, longitudinally extending along the inner surface of the chamber (1b) housing the carriage (C).

7. Optical rule as in claim 6), wherein said two ribs (2, 3) are formed on the inner surface of two opposite walls of said chamber (1b) housing the carriage (C).

8. Optical rule as in claim 1), wherein said carriage (C) comprises a plate (6) to support the optical reading unit (7), and at least one pair of wheels (4a, 4b; 5a, 5b) and a third wheel, all with parallel axles, the pair of wheels (4a, 4b; 5a, 5b) bearing on one wall of the guide, while the third wheel bears on the opposite wall thereof.

9. Optical rule as in claim 8), wherein said carriage (C) comprises a plate (6) to support the optical reading unit (7) and two pairs of wheels (4a, 4b; 5a, 5b) with parallel axles, one pair of wheels replacing said third wheel.

10. Optical rule as in claim 8), wherein at least the axle of one wheel, or the axles of one pair of wheels (5a, 5b). can be adjusted in position in respect of the axles of the other pair.

11. Optical rule as in claim 8), wherein said guide (2, 3) is formed by two opposed ribs (2, 3), said wheels (4a, 4b; 5a, 5b) having a bearing profile complementary to that of the ribs.

12. Optical rule as in claim 11), wherein said ribs (2, 3) have a convex semicircle profile and said wheels (4a, 4b; 5a, 5b) have a bearing surface in the form of a semicircle profiled groove.

13. Optical rule as in claim 8), wherein said guide is formed by two opposed grooves, said wheels (4a, 4b; 5a, 5b) having a bearing profile complementary to that of the grooves.

14. Optical rule as in claim 1), wherein said connection means (12, 11) associated to the carriage (C) consist of a stiff arm (10), extending substantially parallel to the sheath (1) and connected to the carriage (C) and to the second part of the machine tool through a pivot joint (11) provided on at least one of the two ends of the stiff arm (10).

15. Optical rule as in claim 1), wherein said connection means (12, 11) associated to the carriage (C) consist of a stiff arm (12), extending substantially parallel to the sheath (1) and connected to the carriage (C) and to the second part of the machine tool through a ball joint (11) provided on at least one of the two ends of the stiff arm.

## Patentansprüche

1. Optisches Meßlineal für Linearmessungen, insbesondere zum Messen der Verlagerung eines beweglichen Teils einer Werkzeugmaschine in Bezug zu einem feststehenden Teil davon, der Bauart umfassend eine Umhüllung (1) in Form eines kastenartigen Körpers, der Mittel zur starren Verankerung mit einem ersten der genannten Teile der Werkzeugmaschine aufweist, wobei in einer Hauptkammer (1a) des genannten kastenartigen Körpers einerseits ein Meßgitter (R) aufgenommen ist, das durch eine fortlaufende Folge von parallelen Nuten auf einem linearen Streifen gebildet ist, wobei das Meßgitter (R) fest auf dem kastenartigen Körper (1) angebracht ist, und andererseits ein optisches Lesegerät (7), das bewegbar in Bezug auf das genannte Meßgitter (R) gehalten ist, wobei ferner eine Führungseinrichtung in der Hauptkammer (1a) vorgesehen ist, um die Bewegungen des optischen Lesegeräts (7) entlang der Achse der Hauptkammer (1a) mit Präzision zu führen, **dadurch gekennzeichnet, daß** es umfaßt:
- eine zusätzliche Führung (2, 3), die dem kastenartigen Körper der Umhüllung (1) starr zugeordnet ist und parallel zu dem Meßgitter (R) ist,
- einen Schlitten (C), der ohne Spiel entlang der zusätzlichen Führung (2, 3) verfährt,
- Mittel (8, 9) zum Anbringen des optischen Lesegeräts auf dem Schlitten (C), und
- eine Verbindungseinrichtung (12, 11), die zwei Freiheitsgrade aufweist, um den Schlitten (C) mit einem zweiten der genannten beiden Teile der Werkzeugmaschine zu verbinden.

2. Optisches Meßlineal nach Anspruch 1, **dadurch gekennzeichnet, daß** die Umhüllung (1) aus einem metallischen Profilstab (1) besteht, wobei die Führung (2, 3) in einem Stück mit dem genannten metallischen Profilstab (1) ausgebildet ist.

3. Optisches Meßlineal nach Anspruch 1, **dadurch gekennzeichnet, daß** die Umhüllung (1) in Längsrichtung in zwei Kammern (1a, 1b) unterteilt ist, die jeweils zumindest eine in Längsrichtung offene Seite aufweisen, wobei die erste Kammer (1a) das Meßgitter (R) aufnimmt, während der Schlitten (C) verschieblich in der zweiten Kammer (1b) gehalten ist, und wobei der Schlitten (C) mit einem Arm (8) versehen ist, um das optische Lesegerät (7) zu tragen.

4. Optisches Meßlineal nach Anspruch 3, **dadurch gekennzeichnet, daß** auf dem genannten Schlitten (C) ein Verschiebekopf (9) angebracht ist, von dem der Arm (8), der das optische Lesegerät (7) trägt, vorsteht.

5. Optisches Meßlineal nach Anspruch 4, **dadurch gekennzeichnet, daß** der Arm (8), der das optische Lesegerät (7) trägt, ein dünner Arm ist, der in die erste Kammer (1a) durch zumindest ein Paar von längsverlaufenden Dichtlippen (10a, 10b) vorsteht, die entsprechend der offenen Seite der ersten Kammer (1a) fixiert sind.

6. Optisches Meßlineal nach Anspruch 1, **dadurch gekennzeichnet, daß** die.Führung(2, 3) aus zumindest zwei Schienen (2, 3) in Form von Rippen besteht, die sich in Längsrichtung entlang der Innenfläche der Kammer (1b), die den Schlitten (C) aufnimmt, erstrecken.

7. Optisches Meßlineal nach Anspruch 6, **dadurch gekennzeichnet, daß** die beiden Rippen (2, 3) auf der Innenfläche von zwei einander gegenüberliegenden Wänden der Kammer (1b), die den Schlitten (C) aufnimmt, ausgebildet sind.

8. Optisches Meßlineal nach Anspruch 1, **dadurch gekennzeichnet, daß** der Schlitten (C) eine Platte (6) aufweist, um die optisches Leseeinheit (7) zu tragen, und zumindest ein Paar Räder (4a, 4b; 5a, Sb) sowie ein drittes Rad, alle mit parallelen Achsen, wobei das Paar von Rädern (4a, 4b; 5a, Sb) auf einer Wand der Führung läuft, während das dritte Rad auf der gegenüberliegenden Wand davon läuft.

9. Optisches Meßlineal nach Anspruch 8, **dadurch gekennzeichnet, daß** der Schlitten (C) eine Platte (6) aufweist, um die optische Leseeinheit (7) zu tragen, sowie zwei Paare von Rädern (4a, 4b; 5a, 4b) mit parallelen Achsen, wobei ein Paar von Rädern das genannte dritte Rad ersetzt.

10. Optisches Meßlineal nach Anspruch 8, **dadurch gekennzeichnet, daß** zumindest die Achse eines Rades oder die Achsen eines Paars von Rädern (5a, 5b) in ihrer Position in Bezug auf die Achsen des anderen Paars eingestellt werden können.

11. Optisches Meßlineal nach Anspruch 8, **dadurch gekennzeichnet, daß** die Führung (2, 3) durch zwei einander gegenüberliegende Rippen (2, 3) gebildet ist, wobei die Räder (4a, 4b; 5a, 5b) ein Tragprofil haben, das komplementär zu dem der Rippen ist.

12. Optisches Meßlineal nach Anspruch 11, **dadurch gekennzeichnet, daß** die Rippen (2, 3) ein konvexes halbkreisförmiges Profil aufweisen, wobei die Räder (4a, 4b; 5a, 5b) eine tragende Oberfläche in Form einer halbkreisförmig profilierten Nut aufweisen.

13. Optisches Meßlineal nach Anspruch 8, **dadurch gekennzeichnet, daß** die Führung durch zwei einander gegenüberliegende Nuten gebildet ist, wobei die Räder (4a, 4b; 5a, 5b) ein tragendes Profil aufweisen, das komplementär zu dem der Nuten ist.

14. Optisches Meßlineal nach Anspruch 1, **dadurch gekennzeichnet, daß** die Verbindungseinrichtung (12, 11), die dem Schlitten (C) zugeordnet ist, aus einem starren Arm (10) besteht, der sich im wesentlichen parallel zu der Umhüllung (1) erstreckt und mit dem Schlitten (C) und mit dem zweiten Teil der Werkzeugmaschine über eine Schwenkverbindung (11) verbunden ist, die auf zumindest einem der beiden Enden des starren Arms (10) vorgesehen ist.

15. Optisches Meßlineal nach Anspruch 1, **dadurch gekennzeichnet, daß** die Verbindungseinrichtung (12, 11), die dem Schlitten (C) zugeordnet ist, aus einem starren Arm (12) besteht, der sich im wesentlichen parallel zu der Umhüllung (1) erstreckt und mit dem Schlitten (C) sowie mit dem zweiten Teil der Werkzeugmaschine über ein Kugelgelenk (11) verbunden ist, das auf zumindest einem der beiden Enden des starren Arms vorgesehen ist.

## Revendications

1. Règle optique pour des mesures linéaires, en particulier pour mesurer le déplacement d'une partie mobile d'une machine-outil par rapport à une partie fixe de celle-ci, du type comportant une gaine (1) sous la forme d'un corps analogue à une boîte, ayant des moyens pour un ancrage rigide à une première desdites parties de la machine-outil, dans une chambre principale (la) dudit corps analogue à une boîte étant logés, d'une part, une grille de mesure (R) formée par une séquence continue d'encoches parallèles sur une bande linéaire, ladite grille de mesure (R) étant montée fixement sur le corps (1) analogue à une boîte et, d'autre part, un lecteur optique (7) monté de façon à pouvoir se déplacer par rapport à ladite grille de mesure (R), des moyens de guidage étant en outre prévus dans ladite chambre principale (1a) pour guider avec précision les mouvements du lecteur optique (7) le long de l'axe de la chambre principale (1a),
**caractérisée en ce qu'**elle comporte,
- un guide supplémentaire (2, 3) associé rigidement au corps analogue à une boîte de la gaine (1) et parallèle à ladite grille de mesure (R),
- un chariot (C) coulissant sans jeu le long dudit guide supplémentaire (2, 3),
- des moyens (8, 9) pour le montage dudit lecteur optique sur ledit chariot (C), et
- des moyens de liaison (12, 11) ayant deux degrés de liberté, pour relier ledit chariot (C) à une seconde desdites parties de la machine-outil.

2. Règle optique selon la revendication 1, dans laquelle ladite gaine (1) consiste en une barre profilée métallique (1) et ledit guide (2, 3) est formé en une pièce avec ladite barre profilée métallique (1).

3. Règle optique selon la revendication 1, dans laquelle ladite gaine (1) est divisée longitudinalement en deux chambres (1a, 1b), ayant chacune au moins un côté longitudinal ouvert, la première chambre (1a) logeant la grille de mesure (R), tandis que le chariot (C) est monté de façon coulissante dans la seconde chambre (1b), ledit chariot (C) étant équipé d'un bras (8) pour supporter le lecteur optique (7).

4. Règle optique selon la revendication 3, dans laquelle une tête coulissante 9, de laquelle fait saillie ledit bras (8) supportant le lecture optique (7), est montée sur ledit chariot (C).

5. Règle optique selon la revendication 4, dans laquelle ledit bras (8) supportant le lecteur optique (7) est un bras fin qui fait saillie dans la première chambre (1a) à travers au moins une paire de lèvres longitudinales (10a, 10b) d'étanchéité, fixées en correspondance du côté ouvert de ladite première chambre (1a).

6. Règle optique selon la revendication 1, dans laquelle ledit guide (2, 3) consiste en au moins deux rails (2, 3) sous la forme de nervures, s'étendant longitudinalement le long de la surface intérieure de la chambre (1b) logeant le chariot (C).

7. Règle optique selon la revendication 6, dans laquelle lesdites deux nervures (2, 3) sont formées sur la surface intérieure de deux parois opposées de ladite chambre (1b) logeant le chariot (C).

8. Règle optique selon la revendication 1, dans laquelle ledit chariot (C) comporte une plaque (6) destinée à supporter l'unité de lecture optique (7), et au moins une paire de roues (4a, 4b ; 5a, 5b) et une troisième roue, ayant toutes des axes parallèles, la paire de roues (4a, 4b ; 5a, 5b) portant sur une paroi du guide, tandis que la troisième roue porte sur sa paroi opposée.

9. Règle optique selon la revendication 8, dans laquelle ledit chariot (C) comporte une plaque (6) destinée à supporter l'unité de lecture optique (7) et deux paires de roues (4a, 4b ; 5a, 5b) ayant des axes parallèles, une paire de roues remplaçant ladite troisième roue.

10. Règle optique selon la revendication 8, dans laquelle au moins l'axe d'une roue, ou les axes d'une paire de roues (5a, 5b), peuvent être réglés en position par rapport aux axes de l'autre paire.

11. Règle optique selon la revendication 8, dans laquelle ledit guide (2, 3) est formé par deux nervures opposées (2, 3), lesdites roues (4a, 4b ; 5a, 5b) ayant un profil d'appui complémentaire de celui des nervures.

12. Règle optique selon la revendication 11, dans laquelle lesdites nervures (2, 3) ont un profil convexe en demi-cercle et lesdites roues (4a, 4b ; 5a, 5b) ont une surface d'appui sous la forme d'une gorge profilée en demi-cercle.

13. Règle optique selon la revendication 8, dans laquelle ledit guide est formé par deux gorges opposées, lesdites roues (4a, 4b ; 5a, 5b) ayant un profil d'appui complémentaire de celui des gorges.

14. Règle optique selon la revendication 1, dans laquelle lesdits moyens de liaison (12, 11) associés au chariot (C) consistent en un bras rigide (10), s'étendant sensiblement parallèlement à la gaine (1) et relié au chariot (C) et à la seconde partie de la machine-outil par l'intermédiaire d'un joint à pivot (11) situé sur au moins l'une des deux extrémités du bras rigide (10).

15. Règle optique selon la revendication 1, dans laquelle lesdits moyens de liaison (12, 11) associés au chariot (C) consistent en un bras rigide (12), s'étendant sensiblement parallèlement à la gaine (1) et relié au chariot (C) et à la seconde partie de la machine-outil par l'intermédiaire d'un joint à rotule (11) situé sur au moins l'une des deux extrémités du bras rigide.
